Europäisches Patentamt

European Patent Office

Office européen des brevets

(11) Veröffentlichungsnummer: **0 177 683**
A2

## EUROPÄISCHE PATENTANMELDUNG

(21) Anmeldenummer: **85108752.8**

(22) Anmeldetag: **12.07.85**

(51) Int. Cl.⁴: **H 02 P 5/165**

(30) Priorität: **10.10.84 DE 3437091**

(43) Veröffentlichungstag der Anmeldung: **16.04.86**
**Patentblatt 86/16**

(84) Benannte Vertragsstaaten: **AT BE CH DE FR GB IT LI LU NL SE**

(71) Anmelder: **UTP - Schweissmaterial GmbH & Co.,**
**D-7812 Bad Krozingen 2 (DE)**

(72) Erfinder: **Sievert, Horst, Gartenweg 18,**
**CH-4310 Rheinfelden (CH)**

(74) Vertreter: **Ratzel, Gerhard, Dr., Seckenheimer**
**Strasse 36a, D-6800 Mannheim 1 (DE)**

(54) **Verfahren zur Drehzahlregelung von Gleichstrommotoren.**

(57) Die Erfindung betrifft ein Verfahren zur Drehzahlregelung von Gleichstrommotoren sowie die Vorrichtung zur
Durchführung des Verfahrens. Es soll die Aufgabe gelöst
werden, ohne aufwendige Mechanik ein drehzahlproportionales Signal zu erzeugen. Zur Lösung wird vorgeschlagen,
daß der Motor (9) periodisch vom speisenden Netz getrennt
wird, daß die in den Pausen entstehende, generatorisch
erzeugte Spannung des Motors (9) als drehzahlproportionales Signalgemessen und bis zum Beginn des nächsten Meßzyklus gespeichert wird. Das drehzahlproportionale Signal
wird dem Regelkreis als Ist-Wert zugeführt.

## Verfahren zur Drehzahlregelung von Gleichstrommotoren

Die Erfindung betrifft ein Verfahren zur Drehzahlregelung von Gleichstrommotoren und eine Vorrichtung zur Durchführung desselben.

Zur Stabilisierung bzw. Regelung der Drehzahl von Gleichstrommotoren wird gemäß dem bisherigen Stand der Technik dem Regelkreis eine drehzahlproportionale Spannung zugeführt, die von einem mit der Motorwelle verbundenen Tachogenerator erzeugt wird. Naturgemäß ist eine solche Motor-Tachogenerator-Kombination mechanisch sehr aufwendig und teuer. Außerdem unterliegt der Tachogenerator als mechanische Komponente dem Verschleiß. Hinzu kommt, daß auf dem Markt nicht jeder Motor mit integriertem oder angeflanschtem Tachogenerator angeboten wird. Ohne entsprechenden Maschinenpark ist ein nachträglicher Anbau eines Tachogenerators an einen Motor unmöglich. Die Kosten dafür sind somit erheblich.

Demgegenüber liegt vorliegender Erfindung die Aufgabe zugrunde, ein Verfahren und eine Vorrichtung zur Drehzahlregelung von Gleichstrommotoren zu liefern, die einfach und störunanfällig ist, ohne aufwendige Mechanik auskommt und für rasche Nachrüstung geeignet ist. Weiterhin liegt die Aufgabe zugrunde, auch ohne herkömmliche Tachogeneratoren ein drehzahlproprotionales Signal zu erzeugen.

Diese Aufgabe wird bei einem Verfahren der eingangs genannten Gattung erfindungsgemäß dadurch gelöst,
daß der Motor periodisch vom speisenden Netz getrennt wird,
die in den Pausen anstehende, generatorisch erzeugte Spannung des Motors als drehzahlproportionales Signal gemessen und bis zum Beginn des nächsten Meßzyklus gespeichert wird, und gleichzeitig dem Regelkreis als Istwert für die Drehzahl zugeführt wird.

Besondere Ausführungsformen sind dadurch gekennzeichnet, daß die periodische Trennung vom Netz durch einen elektronischen Schalter erfolgt, daß der elektronische Schalter gleichzeitig als Leistungsstellglied fungiert, daß die Frequenz der periodischen Netztrennung sowie die Dauer der Netztrennung (Meßzeitraum) unabhängig voneinander frei wählbar sind, daß die Meßzyklen mit der Frequenz des speisenden Netzes synchronisiert sind.

Die zur Durchführung des erfindungsgemäßen Verfahrens vorgeschlagene Vorrichtung zeichnet sich dadurch aus, daß zur periodischen Trennung des Motors vom Netz ein elektronischer Schalter, der insbesondere als Leistungsstellglied ausgebildet ist, vorgesehen ist, und daß ein mittels eines Impulsgenerators ansteuerbarer Analogschalter vorgesehen ist, um die generatorisch erzeugte Spannung des Motors auf einen nachgeschalteten Speicher, der insbesondere als Sample-and-Hold-Glied ausgebildet ist, zu geben. Die Schaltungsanordnung ist mit einem geringem Aufwand herzustellen, wobei der elektronische Schalter eine hohe Lebensdauer und Funktionssicherheit gewährleistet. Besonders zweckmäßig ist es, den elektronischen Schalter gleichzeitig als Leistungsstellglied auszubilden, so daß insoweit kein zusätzlicher Schaltungsaufwand erforderlich wird. Durch die Ansteuerung des Analogschalters mittels des Impulsgenerators wird eine hohe Genauigkeit des Drehzahl-Istwertsignales erreicht, das mit geringem Schaltungsaufwand in einem Speicher und insbesondere in einem Sample-and-Hold-Glied solange gespeichert wird, bis der nächste Impuls ansteht.

In einer besonders wesentlichen Ausgestaltung wird mit dem Impulsgenerator nicht nur der Analogschalter sondern auch ein Ramp-engenerator angesteuert, der über einen Komparator auf das Leistungsstellglied geführt ist, wobei dem genannten Komparator auch das Ausgangssignal des Regelverstärkers zugeführt wird. Mit einem äußerst geringen Aufwand erfolgt die Synchronisation von periodischer Netztrennung und Meßzeitraum.

Die Erfindung besteht somit darin, daß der Motor in festen Abständen für eine ebenfalls feste Dauer vom speisenden Netz getrennt wird, und die in den so fixierten Pausen, vom Motor generatorisch erzeugte Spannung, gemessen, bis zum Beginn des nächsten Meßzeitraums gespeichert, und dem Regelkreis als drehzahlproportionale Größe zugeführt wird.

Die Erfindung wird nachfolgend anhand der Zeichnungen näher erläutert. Es zeigen:

Figur 1 eine Prinzipschaltskizze der erfindungsgemäßen Vorrichtung;

Figur 2 ein Impulsdiagramm zur Erläuterung der Funktionsweise der Vorrichtung gemäß Figur 1.

- 4 -

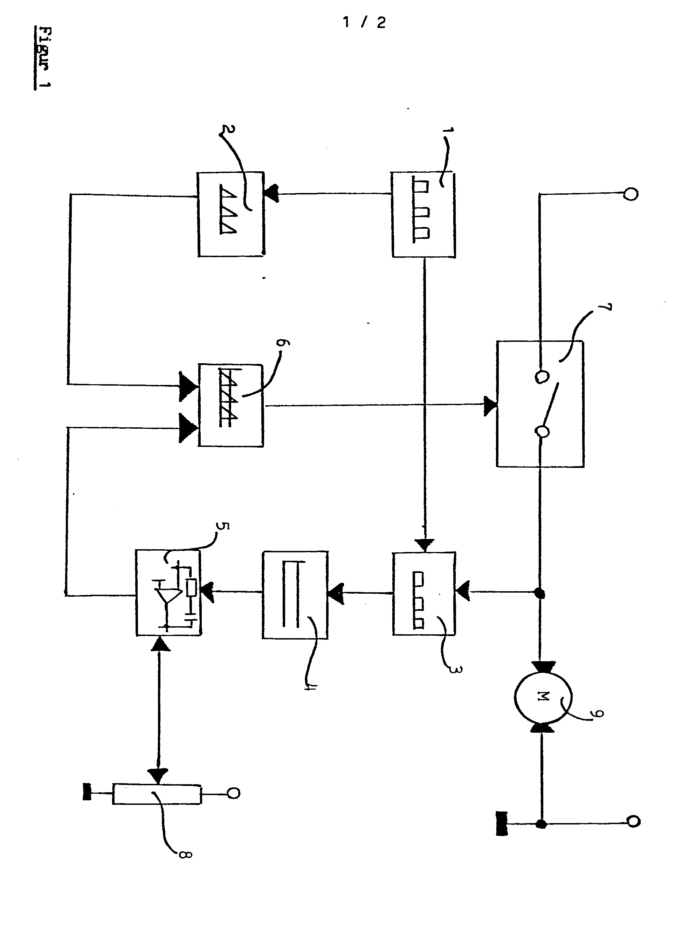

Figur 1 zeigt einen Impulsgenerator 1 zur Ansteuerung eines Rampengenerators 2 und eines Analogschalters 3. Der Analogschalter 3 wird jeweils für die Dauer eines vom Impulsgenerator 1 gelieferten Impulses leitend. Der Analogschalter 3 ist ferner mit dem Motor 9 bzw. dem Ankerstromkreis verbunden, und die vom Motor 9 generatorisch erzeugte Spannung wird an den nachgeschalteten Speicher und zwar dem Sample-and-Hold 4, geleitet und dort bis zum nächsten Impuls gespeichert. Am Ausgang des Sample-and-Hold 4 steht somit das Istwertsignal für die Drehzahl des Motors 9 an. Das Istwertsignal wird ebenso wie das von einem Sollwertsteller 8 abgegriffene Sollwertsignal einem Regelverstärker 5 zugeführt, dessen Ausgang auf einen Komparator 6 geführt ist. Auf den Komparator 6 ist ferner der Ausgang des genannten Rampengenerators 2 geführt. Das somit pulsbreitengesteuerte Ausgangssignal des Komparators 6 dient zur Steuerung des Leistungsstellgliedes 7.

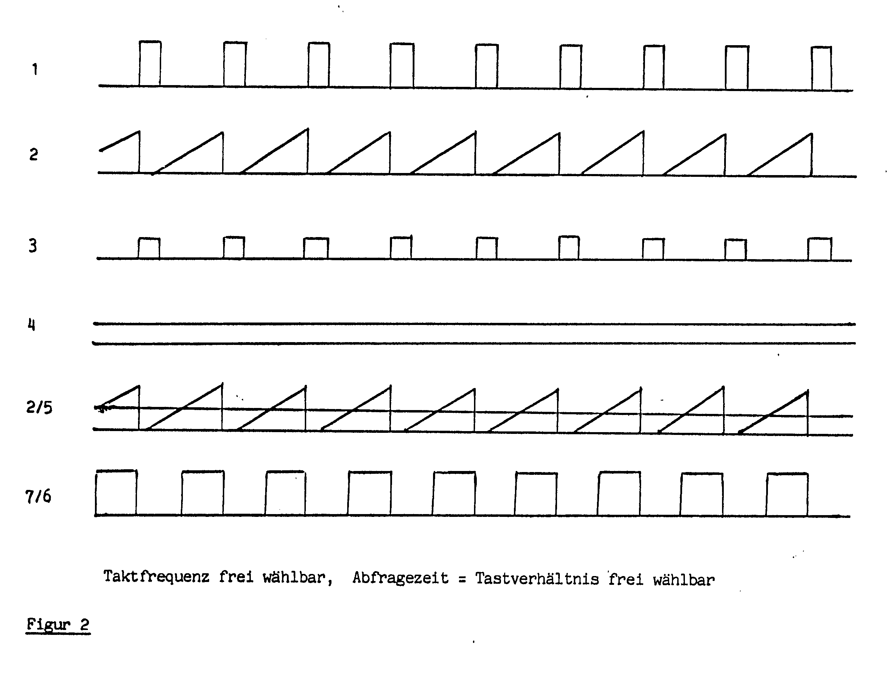

In Figur 2 sind die Impulsdiagramme der verschiedenen Schaltkomponenten gemäß Figur 1 dargestellt. In den Zeilen 1 bis 4 sind jeweils die Ausgangssignale des Impulsgenerators 1, des Rampengenerators 2, des Analogschalters 3 sowie des Sample-and-Hold-Gliedes 4 dargestellt. Das Impulsdiagramm der fünften Zeile zeigt das Ausgangssignal vom Rampengenerator 2 und auch vom Regelverstärker 5. Schließlich ist in der untersten Zeile das Ausgangssignal vom Komparator 6 zu sehen, mit welchem Ausgangssignal das Leistungsstellglied 7 angesteuert wird. In Verbindung mit dem Impulsdiagramm der fünften Zeile ist ohne weiteres ersichtlich, daß die Impulsbreite entsprechend der Größe des Ausgangssignals vom Regelverstärker 5 variiert wird. Es sei ausdrücklich darauf hingewiesen, daß die Taktfrequenz und

- 5 -

auch die Pulsbreite, also das Tastverhältnis, frei vorwählbar sind. Um in zweckmäßiger Weise einen großen Stellbereich von 0 bis 99 % zu erhalten, wird vorzugsweise
ein Tastverhältnis bzw. eine Pulsbreite von 1 % vorgegeben.

## Bezugszeichenliste

| | |
|---|---|
| 1 | Pulsgenerator |
| 2 | Rampengenerator |
| 3 | Analogschalter |
| 4 | Sample-and-Hold |
| 5 | Regelverstärker |
| 6 | Komparator |
| 7 | Leistungsstell-glied |
| 8 | Sollwertsteller |

- 1 -

Patentansprüche

1. Verfahren zur Drehzahlregelung von Gleichstrommotoren,
dadurch gekennzeichnet,
daß der Motor periodisch vom speisenden Netz getrennt wird,
die in den Pausen entstehende , generatorisch erzeugte Spannung des Motors als drehzahlproportionales Signal gemessen und bis zum Beginn des nächsten Meßzyklus gespeichert wird,
und gleichzeitig dem Regelkreis als Istwert für die Drehzahl zugeführt wird.

2. Verfahren gemäß Anspruch 1,
dadurch gekennzeichnet,
daß die periodische Trennung vom Netz durch einen elektronischen Schalter erfolgt.

3. Verfahren gemäß Anspruch 2,
dadurch gekennzeichnet,
daß der elektronische Schalter gleichzeitig als Leistungsstellglied fungiert.

4. Verfahren gemäß Ansprüchen 1 bis 3,
dadurch gekennzeichnet,
daß die Frequenz der periodischen Netztrennung sowie die Dauer der Netztrennung (Messzeitraum) unabhängig voneinander frei wählbar sind.

5. Verfahren gemäß Anspruch 4,
dadurch gekennzeichnet,
daß die Messzyklen mit der Frequenz des speisenden Netzes synchronisiert sind.

6. Vorrichtung zur Durchführung des Verfahrens nach einem der Ansprüche 1 bis 5,
dadurch gekennzeichnet,
daß zur periodischen Trennung vom Netz ein elektronischer Schalter, der bevorzugt als Leistungsstellglied (7) ausgebildet ist, angeordnet ist und daß ein mittels eines Impulsgenerators (1) ansteuerbarer Analogschalter (3) vorgesehen ist, um die generatorisch erzeugte Spannung des Motors (9) auf einen nachgeschalteten Speicher, der insbesondere als Sample-and-Hold-Glied (4) ausgebildet ist, zu geben.

7. Vorrichtung nach Anspruch 6,
dadurch gekennzeichnet,
daß der Speicher mit einem Regelverstärker (5) verbunden ist, welchem der Sollwert von einem Sollwertsteller (8) zugeführt wird.

8. Vorrichtung nach Anspruch 6 oder 7,
dadurch gekennzeichnet,
daß der Ausgang des Regelverstärkers (5) sowie der Ausgang eines Rampengenerators (2) auf einen Komparator (6) geführt ist, dessen pulsbreitenmoduliertes Ausgangssignal das Leistungsstellglied (7) steuert, wobei der Rampengenerator (2) von dem genannten Impulsgenerator (1) angesteuert wird.

0177683

Figur 1

1

2

3

4

2/5

7/6

Taktfrequenz frei wählbar,  Abfragezeit = Tastverhältnis frei wählbar

Figur 2